(19) Europäisches Patentamt
European Patent Office
Office européen des brevets

(11) EP 2 385 465 A1

(12) EUROPEAN PATENT APPLICATION

(43) Date of publication:
**09.11.2011 Bulletin 2011/45**

(51) Int Cl.:
***G06F 11/14*** *(2006.01)*

(21) Application number: **10382104.7**

(22) Date of filing: **03.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Iriscene Software Corporation, S.L.**
**28023 Madrid (ES)**

(72) Inventors:
- **Matias Martin, Jorge**
  **E-28023, Madrid (ES)**
- **De Prat Marti, José Luis**
  **E-28023, Madrid (ES)**
- **Martinez Shotton, Antonio**
  **E-28023, Madrid (ES)**

(74) Representative: **ABG Patentes, S.L.**
**Avenida de Burgos 16D**
**Edificio Euromor**
**28036 Madrid (ES)**

(54) **Storage system and methods of administration and writing in storage systems protected by means of rollback points**

(57) The present invention relates to a method for determining and administering the free space in a data storage medium protected by a recovery system by means of rollback points. A method of writing on these protected storage means as well as a storage system and a program for carrying out said protection are provided along with said method. The method comprises the creation of an overflow file which allows the operating system to determine the available space. A method for writing in the storage medium by means of the modification of the sectors identifiers associated with the system protected by means of rollback points is furthermore provided.

EP 2 385 465 A1

Printed by Jouve, 75001 PARIS (FR)

## Description

Technical Field of the Invention

The present invention relates to computer programs and methods which allow suitably managing and writing the real available space in file systems with multiple rollback points.

State of the Art

The user data recovery systems based on the creation of rollback points (snapshot system) allow taking snapshots of the different states through which a file system passes over time. By using rollback points it is possible to save a snapshot of the file system and to use it as a guide for restoring said file system. Therefore, these recovery systems provide ways of protecting user data which allow recovering files that have been accidentally erased or virtually instantaneously recovering complete disc drives. They generally make a quick recovery of the initial state of the disc possible complemented with a simple administration during the recovery process (backup) when the data volumes are large. Even though these systems also allow user access in a simple, effective and fast manner to data or configurations of the system at the time of taking said snapshots, the implementations in the state of the art present certain problems when administering or managing disc space.

One of the advantages of these earlier recovery systems is that they can be implemented without external drives for storing the data, which are stored by being clustered in entities with a fixed amount of data (sectors or blocks). The protected data are stored either in concealed, unused sectors, or in special files. The access of the operating system to the protected sectors and special files is regulated by means of the snapshot system, such that this snapshot system forms an abstraction layer under the operating system, resulting in that these sectors (data and special files) cannot be directly manipulated by the operating system, but rather through the snapshot system.

When implementing these snapshot system, different implementations on the reading, writing and erasing of the protected data by the snapshot system have been adopted in the industry. Some of them can be encompassed in differential snapshot operations. These methods achieve tracking the changes in the original copy of the data and use a combination of the original sector site and of a reference to the address where the copy and/or the original data sector is stored in the storage medium. The copy-on-write or redirect-on-write approaches, which are described in different documents, such as http://www.ibm.com/developerworks/tivoli/library/t-snaptsm1/index.html, for example, are well known among these methods. A common point of these implementations is that the attempts to modify a piece of data (write and erase) are not done directly on a protected sector but rather the snapshot system redirects the access to a protected sector by assigning the modification to another sector, and by regulating its correct subsequent access by the operating system.

The identification of the sectors reflects the possible states thereof for the snapshot system and for the operating system. For the operating system, the sectors can be "free" (allowing writing) or "occupied" by data. For the snapshot system, the sector can be protected against writing ("protected") or unprotected against writing ("unprotected").

A common difficulty that this type of system faces is that the information about the real space remaining on the disc may not be reliable, and can lead to serious disc writing errors when there is not enough space on the disc to save the data. This is because the information that the operating system has with respect to the free disc space does not take into account the data that the snapshot system considers as protected.

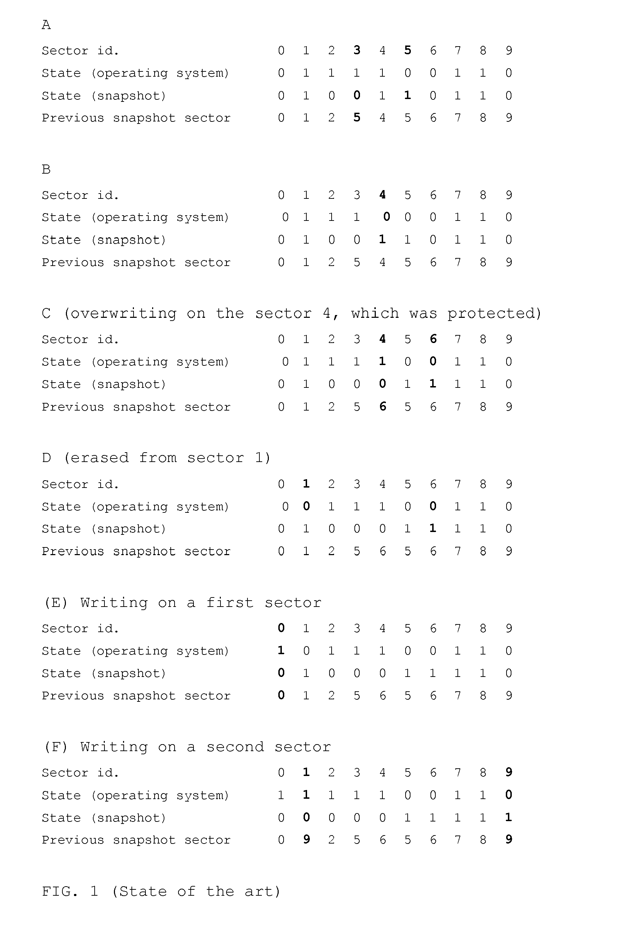

Figure 1 depicts in a schematic and simplified manner the modification processes by using a copy-on-write approach on an original system (panel a) and modification: write (panel b), overwrite (panel c) and erase (panel d). The possible states of the operating system are identified by means of binary representation with the digit 0(1) for free (occupied) states. The possible states for the protected (unprotected) snapshot system are identified with the digit 1(0). Furthermore, the reference of the modified sector to the sector which has been modified more recently than the original one is included.

Erasing a file or writing on a protected sector represent a problem when calculating the real space that is free in the disc, since the operating system, which is what stores the count of said free space, does not take into account the space occupied by the protected sectors and which has internally been marked as free.

If the disc is written on in a subsequent step, an accounting of the free space of the operating system would be presented which would not correspond to the really available space. The example shown in Figure 1 is further explained in order to illustrate these problems.

In this disc, even though there would only be two free sectors (sectors 0 and 9), the operating system would identify 5 sectors in a free state (sectors 0, 1, 5, 6 and 9). This presents the following problems when starting on the disc which, in the example, corresponds to Figure 1D.

In this situation the method involves writing on a greater number of sectors than those which are really free but less than those accounted for by the operating system, which is illustrated in Figure 1 (Figure 1E, Figure 1F) for greater clarity. First of all, if an operating system accounts for and approves a write operation on a disc because the number of sectors is less than that which it maintains accounted for, e.g., in those operating systems which work by copying these sectors in a cache (such as Windows (R)), a message which corresponds to a correctly completed operation would be returned after the operation.

At a lower level, the cache would start the method for writing these sectors. Continuing with the previous example, a method would be started in sector 0. This sector 0 is in a free initial state for the operating system and unprotected for the snapshot. Therefore, the writing does not present problems, and it would pass to an occupied state for the operating system and unprotected for the snapshot as is illustrated in Figure 1E.

In a second step, the operating system would write on a next sector in a free state for the operating system. It is herein shown by way of example how it would be possible to write on any sector in a free state for the operating system and occupied for the snapshot system. In the example, they would be any of sectors 1, 5, 6 of Figure 1E. The next free sector, which would be sector 1, is chosen by way of example.

The snapshot system would intercept the request to write on a sector in a protected state and would move the association of the information to a sector in a free and unprotected state. Continuing with this example, the only possible option is sector 9. The state of the disc after this operation is illustrated in Figure 1F.

When starting the writing of the next sector, the operating system would look for a sector in the free state (sectors 5, 6, 9). A request to write on any sector would be intercepted by the snapshot system. Nevertheless, all the remaining free sectors are in a protected state by the snapshot system, and all the requests would be intercepted.

This results in an error communicated to the file system. In turn, this error reaches the cache and is propagated as a write error in the disc. Occasionally the disc is identified as corrupt since the operating system has identified the writing as successful when it checked the available space.

Furthermore, the file system accounts for the free space (in this example it would still account for sectors 5, 6 and 9 as being free) although since it is protected by the snapshot system subsequent writings will not be successful. Thus, combinations of the aforementioned problems when writing on a disc protected by the snapshot system are repeated.

Therefore, the sectors that are free for the operating system but protected by the snapshot system are problematic because they cannot be written in by the operating system and, therefore, can cause errors of same. Furthermore, correct management of the space is not achieved either when the operating system counts as occupied sectors those sectors which are not protected by the snapshot system. It is desirable to provide a solution that does not need to operate at such a low level and that provides stability and reliability in the determining the space and the disc.

When the free space returned by the operating system does not correspond to the real free space, problems are presented which result in the instability of the system, since the operating system relies on the free space count when it allows or refuses write operations, a fact which is aggravated because the use of write caches is a widely generalized feature in file systems, even more when the more complex NTFS file system is used, which files involve solutions that would involve intercepting interrupts or functions associated with the driver as IRP_MJ_QUERY_VOLUME_INFORMATION.

Description of the Invention

An object of the invention is to provide a method for file recovery systems which allows the operating system to determine the real free space and the recovery system to manage the occupied sectors according to the method defined by claim 1. Furthermore, a method is defined which allows the modification of the content of a file system according to the method defined by claim 5, and a device according to claim 8. Finally, programming means according to claim 9 and 10, and a support means according to claims 11 and 12, are provided.

In a first aspect, a method is defined which allows the operating system to determine the free space in an information storage medium protected by a snapshot system.

The storage medium comprises a set of sectors considered as the minimum drives in which information is stored in the storage medium. The access to the information of said sectors is regulated or administered by an operating system, which controls the access by the applications to the information of the storage medium. A snapshot system regulates the access of the operating system to some sectors forming an abstraction layer under the operating system.

Thus, each of the sectors of the storage medium is identified by means of an identification comprising an address for each sector which relates each sector with a fragment of information of the file system. Furthermore, each sector is marked or identified with a state. For the operating system, this identification comprises a type of free or occupied state. For the snapshot system this identification comprises a type of protected or unprotected state.

The method comprises the following operative steps performed sequentially:

(a) In a first step, a file is created on the file system, a file called overflow file.

(b) In a second step, those sectors which appear free for the operating system, but which are protected for the snapshot system, are assigned to this file. Accordingly, the sectors of said file will be marked as "Occupied" by the Operating System.
(c) In a third step, a state is added which indicates if the sector "belongs to the overflow file". A bit will preferably be used for each sector which is initialized for each sector in the moment of protecting the system, preferably assigning the value 0 to this bit.
(d) In a fourth step, the information is associated with the redirected sectors of the snapshot. This association is preferably done by means of a reference to another sector or by means of writing the information in the same sector.

These operations are repeated on the set of sectors of the storage medium, such that the overflow file will grow until reaching a size equal to the number of free and protected sectors. The operating system will thus reliably evaluate this space remaining in the storage medium.
An advantage of this method allows implementing recovery systems without having to access the counter of the real free space of the operating system.
In an embodiment variant, these states are stored in the form of bits, whereby the real state of a sector of the storage medium is:

```
(Real state)= ( (State of the OS) AND (NOT (Overflow file) ) )
OR (State of the snapshot)
```

In an embodiment variant, the previous method is complemented with a modification of the snapshot system when modifying the files.
The snapshot system will thus consider that, despite being marked as occupied by the operating system, the sector can be used as a destination where protected data can be moved in a simplified alternative manner without having to operate at the operating system level.
In a second aspect, a method of writing in an information storage system protected by a snapshot system incorporating an overflow file is provided. This file allows the operating system to be able to determine the free space of the storage system even though the sectors thereof that are free for the operating system do not correspond to the "completely free" sectors as a result of the use of the snapshot system.
The method of writing can be implemented by means of different embodiment variants using a method of differential protection by snapshots. This method of differential protection by snapshots comprises those known as the copy-on-write or redirect-on-write approaches.
The method of writing comprises the following steps:

(a) Determining the number of m sectors into which the data file is fragmented;
(b) Determining the free space in the storage medium according to the first inventive aspect;
(c) Searching for a first sector in a free state in the storage medium such that:

- if said first sector is found, a process of writing in said first sector of the storage medium is performed.
- if a first sector in a free state is not found, then the following steps are carried out:

    i. A second sector in an unprotected state is sought.
    ii. The state of the second sector changes, then being occupied and protected.
    iii. A method of differential protection by snapshots is used to link the protected data of the first sector and the new data between the first sector and the second sector.

It is an iterative method in which the step (c) of the method of writing is repeated until m sectors are written in the storage medium.
Preferably, in the method the step of searching for the second sector is performed iteratively on the N sectors of the storage medium.
More preferably, each step of the search for the second sector comprises the following steps:

- reading the state of an occupied sector;
- if the state of the first sector is in an occupied state for the operating system and unprotected the search is interrupted;
- Otherwise, a new occupied sector is chosen from among those occupied sectors among which the search has not been carried out and on which it returns to the previous steps.

Otherwise a new sector is chosen among those sectors not sought.

The previous step can preferably be carried out iteratively.

The previous method provides a manner of writing in which the operating system is not involved, it does not present critical system errors, so it is a simplified solution compared to the existing solutions but which provides the system with great stability.

In a third aspect a system is provided which comprises:

- a storage medium for a file system;
- programming means comprising an operating system;
- programming means comprising a snapshot system;
- means adapted for carrying out any of the methods defined in the first and the second inventive aspect.

The invention can be implemented as a set of instructions or computer program which can be executed in programmable means such as a computer, in an information system or in computational means. Said set of instructions comprises a first subset which allows executing any of the embodiment variants of the method defined by the first inventive aspect in first computational means.

Preferably, said set of instructions contains a second subset of instructions which allows executing any of the embodiment variants of the method defined by the second inventive aspect in first computational means.

Both sets of instructions have associated therewith data structures.

In a fourth aspect, a readable medium that can be read by programmable means such as a computer, an information system or computational means, is provided. This readable medium allows the distribution of each of the previous sets of instructions, and can be a storage medium or it can be the signal propagated through a signal carrier medium.

## Brief Description of the Drawings

In order to better understand the invention, its objects and advantages, the following drawings are attached to the specification in which the following is depicted:

- Figure 1 shows a method according to the state of the art;
- Figure 2 shows a scheme for a scheme of a method of carrying out the invention;
- Figures 3 and 4 show the implementation of the methods of the invention.

## Embodiments of the Invention

An embodiment of the invention for determining the free space of an information storage medium protected by a snapshot system according to the copy-on-write approach is shown below. It is also possible to perform various embodiment variants of the invention by means of other schemes of protection by snapshots such as the redirect-on-write approaches and the like.

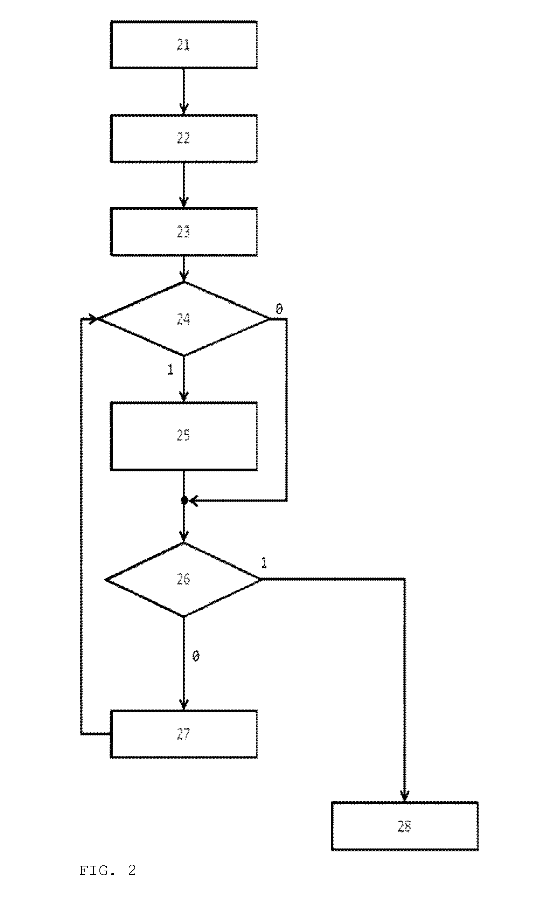

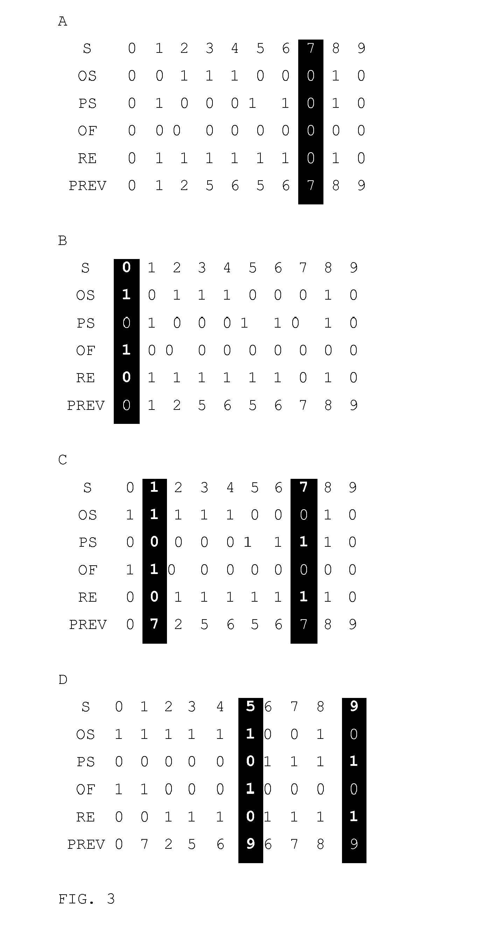

Specifically, the example of this embodiment follows the scheme shown in the flowchart of Figure 2. Figure 3A illustrates the state of the sectors of the storage medium.

The invention particularly starts from a storage medium which in this illustrative embodiment consists of 10 sectors identified in row S by its number as sector 0, sector 1, etc. The state of these sectors for the operating system is defined in an embodiment by means of a bit in row OS: "free" (indicated as 0) or "occupied" (1). The state of these sectors for the snapshot system (row PS) is "unprotected" (0) or "protected" (1).

Initially, there are no sectors assigned to the overflow file, so the sectors are marked as 0 in row OF. The real state of each sector is indicated in row RE and corresponds to a "completely free" (1) or "completely occupied" (0) state. The last row (PREV) corresponds to the address of the previous sector by using the copy-on-write approach.

It can be seen that sectors 0, 7, 9 are in an initial "completely free" state, i.e., "free", not assigned to the overflow file and "unprotected". The remaining sectors are "completely occupied", since in this case they are protected and/or occupied.

In order for the number of real and apparent free sectors to be the same according to the proposed method an overflow file is created. Initially, this file is empty. In an embodiment, a sequential process is used to assign the initially free and protected sectors to this overflow file. An example of the flowchart for the embodiment of the method is illustrated by means of the scheme of Figure 2.

The number of free sectors for the operating system (OS) is thus calculated in this embodiment, which in this case are 6 (sectors 0, 1, 5, 6, 7, 9). In order to calculate the logic value of the real state by using: $RE = ((OS \Lambda (\neg (OF))) V PS)$. The number of "completely free" sectors, the result is 3 (sectors 0, 7 and 9). Sectors 1, 5, 6 are identified as free but protected (OS=0, PS=1)

The search for the sectors starts in a first step (21). To that end in this example, in a second step (22) the sectors are sequentially selected by starting a counter in i=0. In a third step (23), the state of the i-th sector is read. In the next step (24), if the state of the i-th sector is "free" and "protected", this i-th sector is assigned to the overflow file. If the previous condition is not met, the sector is not assigned to the overflow file in a step (25).

It is checked in a step (26) whether all the sectors of the storage medium have been read. In the event that the previous condition of step (26) is met, the program ends. If, in contrast, the condition of step (26) is not met, it passes to the next i+1-th sector and resumes the operation of step (24).

The example is illustrated on the file system described in Figure 3. In this example the snapshot system creates the special file of the 3 sectors.

In the embodiment, the method starts with the first sector (S=0). This sector is free (OS=0) and unprotected (PS=0), so it is incorporated in the overflow file (OF=1) and is then occupied for the operating system (OS=1), as is illustrated in Figure 3B.

As is shown in Figure 3B, the next sector (S=1) is free (OS=0) and protected (PS=1). In this case, the sectors are run through until finding the next free (OS=0) and unprotected (PS=0) sector, which is sector S=7. Then the content of this sector is moved to sector 7, which is then free (OS=0) and protected (PS=1), as is shown in Figure 3C. Sector S=1 is incorporated in the overflow file (OF=1) and is then occupied for the operating system (OS=1), as is illustrated in Figure 3C.

The next free sector for the OS (S=5) is sought. As in the previous sector, the sector is free (OS=0) and protected (PS=1). As in the previous sector, the sectors are run through until finding the next free (OS=0) and unprotected (PS=0) sector, which is sector S=9. Then, the content of this sector S= 5 is moved to sector 9, which is then free (OS=0) and protected (PS=1), as is shown in Figure 3D. Sector S=5 is incorporated in the overflow file (OF=1) and is then occupied for the operating system (OS=1), as is illustrated in Figure 3D.

Since a file has already been created with the number of sectors which was the difference between the completely free space and the number of free sectors, the execution of the method is stopped. Accordingly, the number of free sectors for the operating system coincides with the number of completely free sectors.

In another embodiment, the movement of the free and protected sector selected by a redirect thereof is replaced in each of the previous steps according to the redirect-on-write approach.

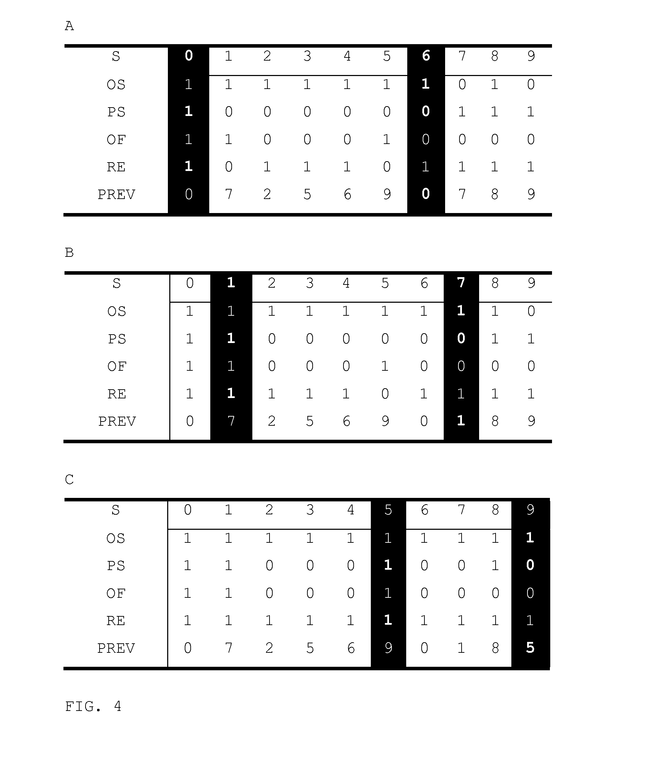

An embodiment of the method of writing is illustrated by means of Figure 4. The writing of these sectors is done on a protected storage system with a snapshot system incorporating an overflow file with an initial state of the storage system described by Figure 3D.

The number of sectors (m) into which the data file is fragmented is determined in a first step. Next, an embodiment for writing three new sectors sequentially by using a copy-on-write approach is described. In this embodiment, the number of sectors coincides by way of example with the number of free sectors for the operating system (sectors 6, 7 and 9). It should be noted that this number coincides with the number of completely free sectors, but these sectors are different (sectors 0, 1 and 5).

Then, the operating system searches for the first free sector (OS=0), which corresponds in this embodiment with sector 6. Next the attempt is made to write in said sector.

If said sector is not protected by the snapshot system (PS=0), said sector would be written on. If, in contrast, it was protected by the snapshot system (PS=1) - as in this case - the state of the sector will go from being free (OS=0) and protected (PS=1) -cfr. Figure 3D- to occupied (OS=1) and unprotected (PS=0) - cfr. Figure 4A.

Then a second free sector (OS=0) in the storage medium is sought. If the second sector is in an unprotected state (PS=0), the content of the initial sector 6 is moved to said second sector S2. Said second sector S2 would then be protected by the snapshot system, the content of the previous snapshot being in the initial sector 6. If, as in Figure 3D, there are no free and unprotected sectors, the proposed method selects the first occupied (OS=1) and unprotected (PS=0) sector. Said sector belongs to the overflow file (OF=1) and therefore its real state is RE=0.

In the proposed embodiment, the first sector with this state corresponds to sector 0 (S=0). In this embodiment of the method of writing, this sector is then protected (PS (0)=0) and the content of sector 6 is moved to sector 0, as can be observed in Figure 4A.

The method is repeated iteratively for each of the sectors to be written, returning to the first step until m sectors are written in the storage medium as is illustrated in Figure 4B (S1= 7, S2=1) and 4C (S1= 9, S2=5). It is therefore possible to write a file in a simpler manner on the storage medium by implementing any approach of differential protection such as that illustrated. No instabilities are presented since the space is correctly counted.

An embodiment of a file system is provided in which the storage medium is an HDD, an SSD or any similar device which allows the storage of data. This medium is divided into blocks or sectors to allow implementing a file system. Access to the information in this storage medium is administered through a rollback point (snapshot) system which can preferably follow the redirect-on-write approach or the copy-on-write approach.

Programming means are adapted for carrying out a snapshot system and an operating system on this storage medium, which cooperate to regulate access to the sectors of the storage medium by the applications.

In one embodiment, these storage medium and programming means are comprised in a computer. More particularly, they are HDD and/or SDD, an NTFS file system being implemented on these HDD and/or SDD, using an OS such as Windows and a snapshot system according to the copy-on-write approach.

On one hand, when these programming means and storage media are adapted for carrying out a method for determining the free space in the storage medium according to any of the previous embodiment variants, the counting of the operating system for the free space prevents write errors and allows greater stability of the system.

On the other hand, when these programming means are adapted for carrying out a method for writing in the storage medium according to any of the previous embodiment variants, a storage medium is provided in which the information is arranged to be restored and written in a more stable manner despite having a snapshot system implemented therein.

A computer program capable of carrying out a method for determining the free space in the storage medium according to any of the previous embodiment variants is also provided.

Another computer program capable of carrying out a method for writing in the storage medium according to any of the previous embodiment variants is also provided.

Finally, a data storage medium comprising any of the previous programs, as well as a signal which allows transmitting and/or executing any of the previous methods are provided.

## Claims

**1.** A method for allowing the determination of the free space in an information storage medium protected by a snapshot system, comprising:

- a storage medium which in turn comprises a plurality of sectors;
- an operating system for administering the information contained in the storage medium;
- a snapshot system for protecting the content of said storage medium;

each of the sectors of the storage medium being

- identified by means of an address of each sector which relates each sector with a fragment of information of the file system;
- associated with a type of free or occupied state for the operating system;
- associated with a type of protected or unprotected state for the snapshot system;

the method comprising the following operative steps:

(a) creating an overflow file on the file system;
(b) assigning to the overflow file those sectors which appear to be free for the operating system and protected for the snapshot system;
(c) identifying said sectors as belonging to the overflow file; and
(d) associating the information with the redirected sectors of the snapshot.

**2.** The method according to claim 1, wherein the association of the information is performed in step d) by means of a reference to the address of another sector.

**3.** The method according to claim 1, wherein the association of the information is performed in step d) by means of writing the information in the same sector.

**4.** The method according to claim 1, wherein the identification of said free states is done by means of any of the combinations comprising:

- assigning a bit for a free or occupied state; or
- assigning a bit for an unprotected or protected state; or
- assigning a bit for identifying whether or not the sector belongs to the overflow file.

**5.** A method of writing a data file in an information storage medium protected by a snapshot system, comprising the following operative steps:

(a) determining the number of m sectors into which the data file is fragmented;
(b) determining the free space in the storage medium according to the method of any one of claims 1 to 5;
(c) searching for a first sector (S1) in a free state in the storage medium such that :

- if said first sector is found (S1) a process of writing in said first sector (S1) of the storage medium (14) is performed.
- if a first sector (S1) in a free state is not found, then the following steps are carried out:

i. search for a second sector (S2) in an unprotected state (15);
ii. the state of the second sector (S2) becomes occupied and protected (16);
iii. a method of differential protection by snapshots is used to link the protected data of the first sector (S1) and the new data between the first sector (S1) and the second sector (S2);

wherein step (c) of the method of writing is repeated iteratively until m sectors are written in the storage medium.

**6.** The method of writing according to claim 5, wherein the step (i) of searching for the second sector (S2) is performed iteratively on the sectors of the storage medium.

**7.** The method of writing according to claim 5 or 6, wherein each step of searching for the second sector (S2) comprises the following steps sequentially:

- reading the state of an occupied sector;
- if the state of this sector is in an occupied state for the operating system and unprotected the search is interrupted;
- otherwise a new occupied sector is chosen from among those occupied sectors among which the search has not been carried out.

**8.** A file recovery system comprising:

- a storage medium for a file system;
- programming means which in turn comprise

o an operating system; and
o a snapshot system;

the programming means being adapted for carrying out any of the methods defined in claims 1 to 7.

**9.** A computer program for allowing the determination of the free space in an information storage medium protected by a snapshot system comprising a software code adapted for carrying out the steps according to the method described in any of claims 1 to 4.

**10.** A computer program for allowing the writing of a data file in an information storage medium protected by a snapshot system comprising a software code adapted for carrying out the steps according to the method described in any of claims 5 to 7.

**11.** A data storage medium comprising a program according to claim 9.

**12.** A data storage medium comprising a program according to claim 10.

A

| Sector id. | 0 | 1 | 2 | **3** | 4 | **5** | 6 | 7 | 8 | 9 |
|---|---|---|---|---|---|---|---|---|---|---|
| State (operating system) | 0 | 1 | 1 | 1 | 1 | 0 | 0 | 1 | 1 | 0 |
| State (snapshot) | 0 | 1 | 0 | **0** | 1 | **1** | 0 | 1 | 1 | 0 |
| Previous snapshot sector | 0 | 1 | 2 | **5** | 4 | 5 | 6 | 7 | 8 | 9 |

B

| Sector id. | 0 | 1 | 2 | 3 | **4** | 5 | 6 | 7 | 8 | 9 |
|---|---|---|---|---|---|---|---|---|---|---|
| State (operating system) | 0 | 1 | 1 | 1 | **0** | 0 | 0 | 1 | 1 | 0 |
| State (snapshot) | 0 | 1 | 0 | 0 | **1** | 1 | 0 | 1 | 1 | 0 |
| Previous snapshot sector | 0 | 1 | 2 | 5 | 4 | 5 | 6 | 7 | 8 | 9 |

C (overwriting on the sector 4, which was protected)

| Sector id. | 0 | 1 | 2 | 3 | **4** | 5 | **6** | 7 | 8 | 9 |
|---|---|---|---|---|---|---|---|---|---|---|
| State (operating system) | 0 | 1 | 1 | 1 | **1** | 0 | **0** | 1 | 1 | 0 |
| State (snapshot) | 0 | 1 | 0 | 0 | **0** | 1 | **1** | 1 | 1 | 0 |
| Previous snapshot sector | 0 | 1 | 2 | 5 | **6** | 5 | 6 | 7 | 8 | 9 |

D (erased from sector 1)

| Sector id. | 0 | **1** | 2 | 3 | 4 | 5 | 6 | 7 | 8 | 9 |
|---|---|---|---|---|---|---|---|---|---|---|
| State (operating system) | 0 | **0** | 1 | 1 | 1 | 0 | **0** | 1 | 1 | 0 |
| State (snapshot) | 0 | 1 | 0 | 0 | 0 | 1 | **1** | 1 | 1 | 0 |
| Previous snapshot sector | 0 | 1 | 2 | 5 | 6 | 5 | 6 | 7 | 8 | 9 |

(E) Writing on a first sector

| Sector id. | **0** | 1 | 2 | 3 | 4 | 5 | 6 | 7 | 8 | 9 |
|---|---|---|---|---|---|---|---|---|---|---|
| State (operating system) | **1** | 0 | 1 | 1 | 1 | 0 | 0 | 1 | 1 | 0 |
| State (snapshot) | **0** | 1 | 0 | 0 | 0 | 1 | 1 | 1 | 1 | 0 |
| Previous snapshot sector | **0** | 1 | 2 | 5 | 6 | 5 | 6 | 7 | 8 | 9 |

(F) Writing on a second sector

| Sector id. | 0 | **1** | 2 | 3 | 4 | 5 | 6 | 7 | 8 | **9** |
|---|---|---|---|---|---|---|---|---|---|---|
| State (operating system) | 1 | **1** | 1 | 1 | 1 | 0 | 0 | 1 | 1 | **0** |
| State (snapshot) | 0 | **0** | 0 | 0 | 0 | 1 | 1 | 1 | 1 | **1** |
| Previous snapshot sector | 0 | **9** | 2 | 5 | 6 | 5 | 6 | 7 | 8 | **9** |

FIG. 1 (State of the art)

21
22
23
24
0
1
25
26
1
0
27
28

FIG. 2

A

| S | 0 | 1 | 2 | 3 | 4 | 5 | 6 | 7 | 8 | 9 |
|---|---|---|---|---|---|---|---|---|---|---|
| OS | 0 | 0 | 1 | 1 | 1 | 0 | 0 | 0 | 1 | 0 |
| PS | 0 | 1 | 0 | 0 | 0 | 1 | 1 | 0 | 1 | 0 |
| OF | 0 | 0 | 0 | 0 | 0 | 0 | 0 | 0 | 0 | 0 |
| RE | 0 | 1 | 1 | 1 | 1 | 1 | 1 | 0 | 1 | 0 |
| PREV | 0 | 1 | 2 | 5 | 6 | 5 | 6 | 7 | 8 | 9 |

B

| S | 0 | 1 | 2 | 3 | 4 | 5 | 6 | 7 | 8 | 9 |
|---|---|---|---|---|---|---|---|---|---|---|
| OS | 1 | 0 | 1 | 1 | 1 | 0 | 0 | 0 | 1 | 0 |
| PS | 0 | 1 | 0 | 0 | 0 | 1 | 1 | 0 | 1 | 0 |
| OF | 1 | 0 | 0 | 0 | 0 | 0 | 0 | 0 | 0 | 0 |
| RE | 0 | 1 | 1 | 1 | 1 | 1 | 1 | 0 | 1 | 0 |
| PREV | 0 | 1 | 2 | 5 | 6 | 5 | 6 | 7 | 8 | 9 |

C

| S | 0 | 1 | 2 | 3 | 4 | 5 | 6 | 7 | 8 | 9 |
|---|---|---|---|---|---|---|---|---|---|---|
| OS | 1 | 1 | 1 | 1 | 1 | 0 | 0 | 0 | 1 | 0 |
| PS | 0 | 0 | 0 | 0 | 0 | 1 | 1 | 1 | 1 | 0 |
| OF | 1 | 1 | 0 | 0 | 0 | 0 | 0 | 0 | 0 | 0 |
| RE | 0 | 0 | 1 | 1 | 1 | 1 | 1 | 1 | 1 | 0 |
| PREV | 0 | 7 | 2 | 5 | 6 | 5 | 6 | 7 | 8 | 9 |

D

| S | 0 | 1 | 2 | 3 | 4 | 5 | 6 | 7 | 8 | 9 |
|---|---|---|---|---|---|---|---|---|---|---|
| OS | 1 | 1 | 1 | 1 | 1 | 1 | 0 | 0 | 1 | 0 |
| PS | 0 | 0 | 0 | 0 | 0 | 0 | 1 | 1 | 1 | 1 |
| OF | 1 | 1 | 0 | 0 | 0 | 1 | 0 | 0 | 0 | 0 |
| RE | 0 | 0 | 1 | 1 | 1 | 0 | 1 | 1 | 1 | 1 |
| PREV | 0 | 7 | 2 | 5 | 6 | 9 | 6 | 7 | 8 | 9 |

FIG. 3

A

| S | 0 | 1 | 2 | 3 | 4 | 5 | 6 | 7 | 8 | 9 |
|---|---|---|---|---|---|---|---|---|---|---|
| OS | 1 | 1 | 1 | 1 | 1 | 1 | 1 | 0 | 1 | 0 |
| PS | 1 | 0 | 0 | 0 | 0 | 0 | 0 | 1 | 1 | 1 |
| OF | 1 | 1 | 0 | 0 | 0 | 1 | 0 | 0 | 0 | 0 |
| RE | 1 | 0 | 1 | 1 | 1 | 0 | 1 | 1 | 1 | 1 |
| PREV | 0 | 7 | 2 | 5 | 6 | 9 | 0 | 7 | 8 | 9 |

B

| S | 0 | 1 | 2 | 3 | 4 | 5 | 6 | 7 | 8 | 9 |
|---|---|---|---|---|---|---|---|---|---|---|
| OS | 1 | 1 | 1 | 1 | 1 | 1 | 1 | 1 | 1 | 0 |
| PS | 1 | 1 | 0 | 0 | 0 | 0 | 0 | 0 | 1 | 1 |
| OF | 1 | 1 | 0 | 0 | 0 | 1 | 0 | 0 | 0 | 0 |
| RE | 1 | 1 | 1 | 1 | 1 | 0 | 1 | 1 | 1 | 1 |
| PREV | 0 | 7 | 2 | 5 | 6 | 9 | 0 | 1 | 8 | 9 |

C

| S | 0 | 1 | 2 | 3 | 4 | 5 | 6 | 7 | 8 | 9 |
|---|---|---|---|---|---|---|---|---|---|---|
| OS | 1 | 1 | 1 | 1 | 1 | 1 | 1 | 1 | 1 | 1 |
| PS | 1 | 1 | 0 | 0 | 0 | 1 | 0 | 0 | 1 | 0 |
| OF | 1 | 1 | 0 | 0 | 0 | 1 | 0 | 0 | 0 | 0 |
| RE | 1 | 1 | 1 | 1 | 1 | 1 | 1 | 1 | 1 | 1 |
| PREV | 0 | 7 | 2 | 5 | 6 | 9 | 0 | 1 | 8 | 5 |

FIG. 4

Europäisches Patentamt
European Patent Office
Office européen des brevets

# EUROPEAN SEARCH REPORT

Application Number
EP 10 38 2104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/109925 A2 (RAJA RICO [DK]) 11 September 2009 (2009-09-11) * paragraphs [0019], [0048], [0051], [0060] - [0071] * * figures 4,6,8-10 * ----- | 1-12 | INV. G06F11/14 |
| X | US 2004/133602 A1 (KUSTERS NORBERT P [US] ET AL) 8 July 2004 (2004-07-08) * paragraphs [0011], [0027] - [0031], [0036] - [0038], [0041] - [0045], [0051] * * claims 12,15 * * figures 1,3,5,11 * ----- | 1-12 | |

TECHNICAL FIELDS SEARCHED (IPC)

G06F

The present search report has been drawn up for all claims

| Place of search | Date of completion of the search | Examiner |
|---|---|---|
| Munich | 1 September 2010 | Johansson, Ulf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 10 38 2104

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2010

| Patent document cited in search report | Publication date | Patent family member(s) | Publication date |
|---|---|---|---|
| WO 2009109925 A2 | 11-09-2009 | NONE | |
| US 2004133602 A1 | 08-07-2004 | US 2010100701 A1 | 22-04-2010 |

EPO FORM P0459

For more details about this annex : see Official Journal of the European Patent Office, No. 12/82